# EUROPEAN PATENT APPLICATION

(11) **EP 4 809 816 A1**
(43) Date of publication of application: **23.09.2026**
(21) Application number: 25198676.6
(22) Date of filing: 28.08.2025
(51) Int. Cl.: A01G 9/24, F21V 21/30, F21V 17/00

(54) **FOLDABLE PLANT GROWING LAMP**

(30) Priority: 19.03.2025 CN 202520482878 U
(71) Applicant: Guangdong SNC Technology Co., Ltd., Zhongshan City 528400 (CN)
(72) Inventor: XU, Jianyong, Zhongshan City, 528400 (CN); YANG, Qunfei, Zhongshan City, 528400 (CN); LI, Qichang, Zhongshan City, 528400 (CN); ZHUO, Yikai, Zhongshan City, 528400 (CN)
(74) Representative: Lin Chien, Mon-Yin

(57) **Abstract**

The present disclosure provides a foldable plant growing lamp, which relates to the field of plant planting technologies. The foldable plant growing lamp includes a main lighting member (10), two extension lighting components (20, 20') rotatably arranged on two sides of the main lighting member (10), respectively, and a power supply member (30) arranged on the main light member (10) and electrically connected to the main lighting member (10) and the two extension lighting components (20, 20'). The two extension lighting components (20, 20') are rotatable relative to the main lighting member (10), so that the two extension lighting components (20, 20') can fold and unfold relative to the main lighting member (10). When the two extension lighting components (20, 20') and the main lighting member (10) are folded together for being storage and transportation, a space occupied by the plant growing lamp is saved, and when the two extension lighting components (20, 20') and the main lighting member (10) are unfolded, the plant growing lamp is used to illuminate plants.

## Description

### CROSS-REFERENCE TO RELATED APPLICATION

This application claims the benefit of priority from Chinese Patent Application No. 202520482878.7 entitled "PLANT GROWING LAMP" and filed on March 19, 2025, the content of which is hereby incorporated by reference in its entire by reference.

### BACKGROUND

### Technical Field

The present disclosure generally relates to the field of plant planting technologies, and especially relates to a foldable plant growing lamp.

### Description of Related Art

In the field of modern plant cultivations, especially in indoor planting scenarios, lighting conditions play a crucial role in plant growth. Because the fact that indoor natural light conditions often can't meet requirements of plant growth, artificial light sources have become a necessary supplement so that plant growth lamps have emerged as the times require. LED plant growing lamps are widely used in indoor plant cultivation due to the LED plant growing lamp has advantages of low energy consumption, adjustable spectrum and a long lifespan. However, the current LED plant growing lamps on the market have exposed many problems in practical usage.

Poor installation convenience and low efficiency: Indoor plant planting usually requires a large area of light coverage, so that an elongated LED tube is a common choice and often requires a large number of tubes to be arranged at intervals. This type of lamp has a long length and is not convenient for storage, so that a lot of space and resources are occupied in a storage and transportation process, and a packaging cost is expensive.

Therefore, the present disclosure designs a foldable plant growing lamp that can save a space and reduce packaging and transportation costs during storage and transportation, and can be unfolded to illuminate a wider range during being used.

### SUMMARY

The technical problems to be solved: in view of the shortcomings of the related art, the present disclosure provides a foldable plant growing lamp which can save a space and reduce packaging and transportation costs during storage and transportation by folding the plant growing lamp, and can be unfolded to illuminate a wider range during being used.

In order to solve the above objectives, a foldable plant growing lamp according to an embodiment of the present disclosure includes:
a main lighting member;
an extension lighting components, two adjacent extension lighting components rotatably connected with each other, and the extension lighting components that are close to the main lighting member rotatably arranged on two sides of the main lighting member, respectively, wherein n is an integer greater than or equal to two;
a power supply member arranged on the main light member and electrically connected to the main lighting member and the n extension lighting components; and wherein
the n extension lighting components are rotatable relative to the main lighting member, and two adjacent extension lighting components are rotatable with each other, so that the n extension lighting components are folded and unfolded relative to the main lighting member, and two adjacent extension lighting components are also folded and unfolded with each other; and wherein when the n extension lighting components and the main lighting member are folded together, and two adjacent extension lighting components are folded, the foldable plant growing lamp is stored and transported to save a space that is occupied by the plant growing lamp, and when the n extension lighting components and the main lighting member are unfolded, and two adjacent extension lighting components are also unfolded, the foldable plant growing lamp is used to illuminate plants.

Wherein the foldable plant growth lamp further includes m rotating modules, wherein the rotating module is arranged between the main lighting member and the extension lighting component that is close to the main lighting member, and configured to adjust an angle between the main lighting member and the extension lighting component, the rotating module arranged between two adjacent extension lighting components to adjust an angle between the two adjacent extension lighting components, wherein m is an integer greater than or equal to two.

Wherein each of the m rotating modules includes a first connecting element, a second connecting element and a bolt, the first connecting element installed on an end of the main lighting member, the second connecting element installed on an end of the extension lighting component that is close to the main lighting member, the bolt passing through the first connecting element and the second connecting element, and configured to lock the first connecting element and the second connecting element; and wherein the first connecting element and the second connecting element are rotatable around the bolt to adjust the angle between the main lighting member and the extension lighting component, the first connecting element installed on the end of one of the two adjacent extension lighting components, and the second connecting element installed on the end of the other of the two adjacent extension lighting components, wherein the first connecting element and the second connecting element are rotatable around the bolt to adjust the angle between the two adjacent extension lighting components.

Wherein the main lighting member includes two first installation arms opposite to each other, and a plurality of first lighting modules arranged between the two first installation arms, two ends of the first lighting module respectively mounted on the two first installation arms; and wherein each of the n extension lighting components includes two second installation arms opposite to each other, and a plurality of second lighting modules arranged between the two second installation arms, two ends of the second lighting module respectively mounted on the two second installation arms.

Wherein the first connecting element includes a first rotating portion and a first fixing portion connected to each other, the first fixing portion arranged on a side of the first rotating portion and including an insertion portion and an outer portion connected to each other, the insertion portion inserted into the first installation arm or one of two adjacent second installation arms, and the outer portion located outside the first installation arm or one of the two adjacent second installation arms; and wherein the second connecting element includes a second rotating portion and a second fixing portion connected to each other, the second rotating portion attached to the first rotating portion, the second fixing portion opposite to the first fixing portion, each of the first rotating portion and the second rotating portion including an installation hole, and the bolt passing through the installation holes to lock the first rotating portion and the second rotating portion.

Wherein the rotating module further includes an adjusting element installed on the first connecting element, one end of the adjusting element screwed into the first fixing portion, and the other end of the adjusting element abutted against the second fixing portion, wherein an angle between the first fixing portion and the second fixing portion is adjusted by adjusting a depth that the adjusting element is screwed into the first fixing portion, so as to adjust an illumination angle of each extension lighting component.

Wherein a gap is formed between the first fixing portion and the second fixing portion.

Wherein each of the first lighting module and the second lighting module includes a heat dissipation shell, an LED light board and two first end caps, the LED light board installed on the heat dissipation shell, and the two first end caps of the first lighting module respectively arranged on two ends of the heat dissipation shell of the first lighting module, and fixedly installed on the first installation arm, the two first end caps of the second lighting module respectively arranged on two ends of the heat dissipation shell of the second lighting module, and fixedly installed on the second installation arm.

Wherein each of the first installation arm and the second installation arm includes a U-shaped frame, and a cover plate mounted on the U-shaped frame to form a square frame structure thereof.

Wherein the power supply member includes a bottom housing, a top housing, a drive power module, a control board and two second end caps, the top housing installed on the bottom housing to form a receiving room for receiving the power module and the control board therein, the two second end caps respectively set at both ends of the bottom housing and the top housing, and respectively installed on the first installation arm.

Wherein each of the bottom housing and the top housing is a groove-shaped structure, the bottom housing and the top housing opposite to each other to form a semi-closed structure with openings at both ends thereof; and wherein two ends of the top housing along a width direction thereof are abutted against two ends of the bottom housing along a width direction thereof, and a clamping slot is provided on an inner side of the top housing that is close to the two ends of the top housing, a clamping portion provided on the bottom housing and corresponding to the clamping slot, and the clamping portion inserted into the clamping slot.

Wherein an arc-shaped cavity is formed on a side wall of the clamping slot, and a sealing strip is installed inside the arc-shaped cavity, the sealing strip attached to the clamping portion, and configured to seal the two ends of the bottom housing and the top housing along the width direction thereof.

Wherein the control board is equipped with a potentiometer, an electrical terminal, a plurality of RJ45 network ports and a control switch, the drive power module including a first drive power, a second drive power, a third drive power and a fourth drive power, the electrical terminal including a first interface connected to the first drive power, a second interface connected to the second drive power, a third interface connected to the third drive power, and a fourth interface connected to the fourth drive power; and wherein the first drive power, the second drive power, the third drive power and the fourth drive power are respectively connected to a first light bead, a second light bead, a third light bead and a fourth light bead that are set on the LED light board, so that a first type of light, a second type of light, a third type of light and a fourth type of light with different frequency bands are respectively adjusted, wherein signals that are output from the first to fourth drive powers are 0-10V; and wherein the potentiometer is configured to adjust independent output intensity of the first types of light, the second types of light, the third types of light, and the fourth type of light with different frequency bands, so as to adjust an illumination spectrum thereof.

Wherein the control switch includes an electronic switch and a handle, the electronic switch fixedly installed on the control board, and the handle connected to the electronic switch and configured to be passively toggled to change a state of the electronic switch; and wherein the electronic switch is configured to adjust light intensity emitted from the first light bead, the second light bead, the third light bead, and the fourth light bead, so as to adjust a total output power of the foldable plant growing lamp thereof.

A foldable plant growing lamp according to another embodiment of the present disclosure includes:
a main lighting member with two sides opposite to each other;
two extension lighting components rotatably arranged on the two sides of the main lighting member, respectively;
two rotating modules respectively arranged between the main lighting member and the two extension lighting components, and configured to drive the two extension lighting components to rotate relative to the main lighting member;
a power supply member installed on the main lighting member and electrically connected to the main lighting member and the two extension lighting components; and wherein
the two extension lighting components are rotated relative to the main lighting member through the two rotating modules to adjust an angle that is formed between the two extension lighting components and the main lighting member, so as to adjust a light output direction of the two extension lighting components.

Wherein the main lighting member includes two first installation arms opposite to each other, and a plurality of first lighting modules arranged between the two first installation arms, two ends of the first lighting module respectively mounted on the two first installation arms; and wherein each of the two extension lighting components includes two second installation arms opposite to each other, and a plurality of second lighting modules arranged between the two second installation arms, two ends of the second lighting module respectively mounted on the two second installation arms, and the two second installation arms corresponding to the two first second installation arms, respectively.

Wherein each of the two rotating modules includes a first connecting element, a second connecting element and a bolt, the first connecting element installed on an end of the first installation arm, the second connecting element installed on an end of the second installation arm, the bolt passing through the first connecting element and the second connecting element, and configured to lock the first connecting element and the second connecting element; and wherein the first connecting element and the second connecting element are rotatable around the bolt to adjust the angle between the main lighting member and the two extension lighting components.

Wherein the first connecting element includes a first rotating portion and a first fixing portion connected to each other, the first fixing portion arranged on a side of the first rotating portion and including an insertion portion and an outer portion connected to each other, the insertion portion inserted into the first installation arm, and the outer portion located outside the first installation arm; and wherein the second connecting element includes a second rotating portion and a second fixing portion connected to each other, the second rotating portion attached to the first rotating portion, the second fixing portion opposite to the first fixing portion, each of the first rotating portion and the second rotating portion including an installation hole, and the bolt passing through the installation holes to lock the first rotating portion and the second rotating portion.

Wherein the rotating module further includes an adjusting element installed on the first connecting element, one end of the adjusting element screwed into the first fixing portion, and the other end of the adjusting element abutted against the second fixing portion, wherein an angle between the first fixing portion and the second fixing portion is adjusted by adjusting a depth that the adjusting element is screwed into the first fixing portion, so as to adjust an illumination angle of each of the two extension lighting components.

Wherein a gap is formed between the first fixing portion and the second fixing portion.

The foldable plant growing lamp of the present disclosure adopts the extension lighting component and the main lighting member that can be rotated and adjusted to achieve folding and unfolding operations. When the extension component and the main lighting member are folded to each other, it is convenient for being storage and transportation of the plant growing lamp, so that a space that is occupied by the plant growing lamp can be saved, and when the extension lighting component and the main lighting member are unfolded, the plant growing lamp is used to illuminate the plants.

### BRIEF DESCRIPTION OF THE DRAWINGS

In order to more clearly understand the technical solution hereinafter in embodiments of the present disclosure, a brief description to the drawings used in detailed description of embodiments hereinafter is provided thereof. Obviously, the drawings described below are some embodiments of the present disclosure, for one of ordinary skill in the related art, other drawings can be obtained according to the drawings below on the premise of no creative work.
FIG. 1 is a schematic view of a foldable plant growing lamp in accordance with a first embodiment of the present disclosure.
FIG. 2 is similar to FIG. 1, but shown from another view.
FIG. 3 is a partial exploded, schematic view of the foldable plant growing lamp of the present disclosure.
FIG. 4 is an exploded, schematic view of the foldable plant growing lamp of the present disclosure.
FIG. 5 is a schematic view of a rotation adjusting member of the foldable plant growing lamp of the present disclosure.
FIG. 6 is an exploded, schematic view of a first connecting element and a second connecting element of the foldable plant growing lamp of the present disclosure.
FIG. 7 is an exploded, schematic view of a first lighting module of the foldable plant growing lamp of the present disclosure.
FIG. 8 is an exploded, schematic view of a first installation arm of the foldable plant growing lamp of the present disclosure.
FIG. 9 is a schematic view of a power supply member of the foldable plant growing lamp of the present disclosure.
FIG. 10 is an exploded, schematic view of the power supply member of the foldable plant growing lamp of the present disclosure.
FIG. 11 is a schematic view of a part of the power supply member of the foldable plant growing lamp of the present disclosure.
FIG. 12 is a schematic view of a control board of the foldable plant growing lamp of the present disclosure.
FIG. 13 is similar to FIG. 12, but shown from another view.
FIG. 14A and FIG. 14B is a schematic block diagram of a control logic of the control board of the foldable plant growing lamp of the present disclosure.
FIG. 15 is a schematic view of a foldable plant growing lamp in accordance with a second embodiment of the present disclosure.

The element labels according to the embodiment of the present disclosure shown as below: 10 main lighting member, 11 first installation arm, 111 U-shaped frame, 112 cover plate, 12 first lighting module, 121 heat dissipation shell, 122 LED light board, 123 first end cap, 20, 20' extension lighting component, 21 second installation arm, 22 second lighting module, 30 power supply member, 31 bottom housing, 311 clamping portion, 32 top housing, 321 clamping slot, 322 arc-shaped cavity, 33 drive power module, 331 first drive power, 332 second drive power, 333 third drive power, 334 fourth drive power, 34 control board, 341 potentiometer, 342 electrical terminal, 343 RJ45 network port, 344 control switch, 3441 electronic switch, 3442 handle, 35 second end cap, 351 installation chamber, 36 receiving room, 37 sealing strip, 38 gasket, 40, 40' rotation adjusting member, 41 rotating module, 411 first connecting element, 4111 first rotating portion, 4112 first fixing portion, 4113 installation hole, 41121 inserting portion, 41122 outer portion, 412 second connecting element, 4121 second rotating portion, 4122 second fixing portion, 413 bolt, 414 adjusting element, 415 gap, a first light bead, b second light bead, c third light bead, d fourth light bead.

### DETAILED DESCRIPTION

Reference will now be made in detail to embodiments, examples of which are illustrated in the accompanying drawings. In the following detailed description, numerous specific details are set forth in order to provide a thorough understanding of the subject matter presented herein. Obviously, the implementation embodiment in the description is a part of the present disclosure implementation examples, rather than the implementation of all embodiments, examples. According to the described exemplary embodiment of the present disclosure, all other embodiments obtained by one of ordinary skill in the related art on the premise of no creative work are within the protection scope of the present disclosure.

It should also be noted that if terms such as directional indications of "up", "down", "left", "right", "front" and "back", etc. are involved in the embodiments of the present disclosure, the directional indications are only used to explain a relative position relationship and a motion condition etc between components in a specific posture. If the specific posture changes, the directional indications will also change accordingly. The terms used in the specification of the present disclosure are only for the purpose of describing specific embodiments without being intended to limit the present disclosure. As used in the description of the present disclosure and the appended claims, terms of "one", "one" and "the" in a singular form are intended to include a plural form unless the context clearly indicates otherwise.

In addition, the terms such as "first" and "second" shown in the specification are only used to describe, but not indicated that the elements of the present disclosure is important or represented the amount of the elements. That is, the features limited by the terms of "first" and "second" may explicitly or implicitly include one or more features. It should also be further understood that the term "and/or" used in the description of the present disclosure refers to include three parallel schemes that it is taken "A and/or B" as an example, which includes an A scheme, or a B scheme, or both A and B schemes. In addition, technical solutions among various embodiments can be combined with each other, but it should be implemented for one of ordinary skill in the related art. When the combination of technical solutions is contradictory or impossible to be implemented, it should be considered that such combination of technical solutions does not exist and is not within the protection scope of the present disclosure.

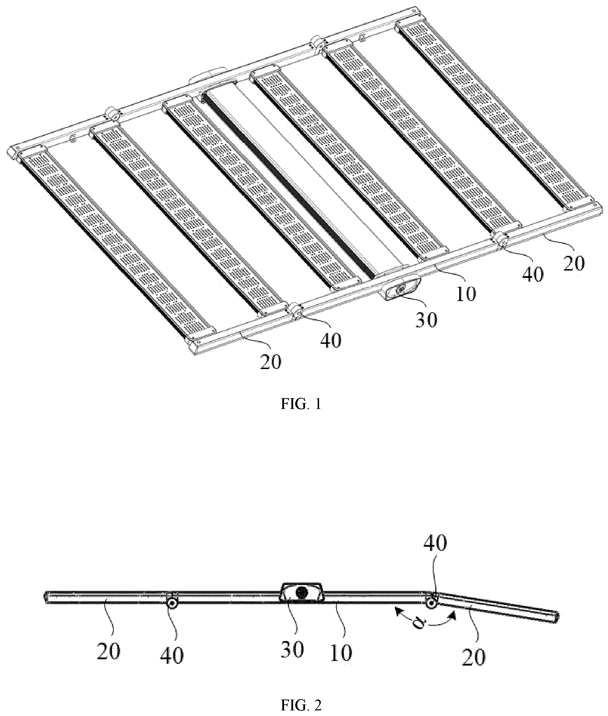

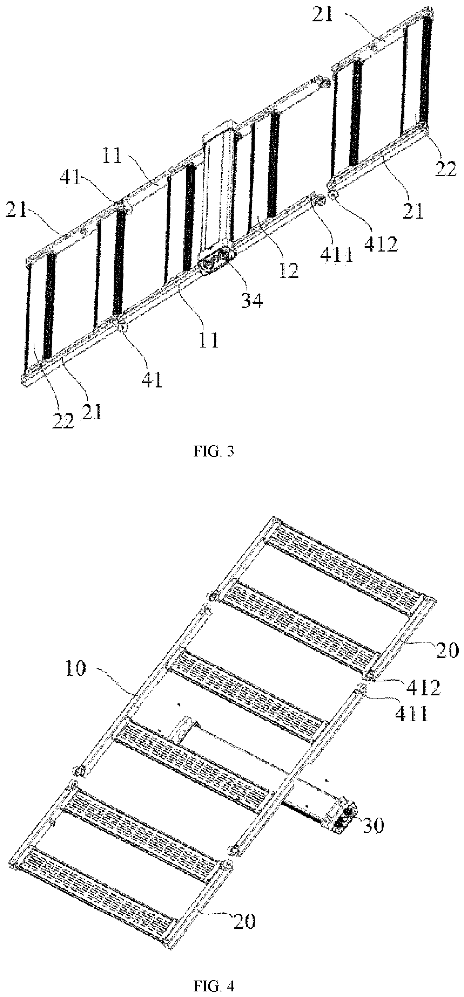

Referring to FIGS. 1-4, a foldable plant growing lamp according to an embodiment of the present disclosure includes a main lighting member 10, a power supply member 30 and two extension lighting components 20. The two extension lighting components 20 are rotatably arranged on two sides of the main lighting member 10, respectively. The power supply member 30 is installed on the main lighting member 10 and electrically connected to the main lighting member 10 and the two extension lighting components 20. The two extension lighting components 20 can be rotated relative to the main lighting member 10, so that the two extension lighting components 20 can be folded and unfolded relative to the main lighting member 10. When the two extension lighting components and the main lighting member 10 are folded together, the foldable plant growing lamp is convenient for being storage and transportation, so that a space that is occupied by the foldable plant growing lamp can be saved. When the two extension lighting components 20 and the main lighting member 10 are unfolded, the foldable plant growing lamp can be used to illuminate plants.

Specifically, in an embodiment of the present disclosure, the two extension lighting components 20 are located on the two sides of the main lighting member 10 and have flexible rotation adjustment functions, which can achieve folding and unfolding operations. In a folded state, the two extension lighting components 20 rotate inward until the two extension lighting components 20 completely overlap with the main lighting member 10, at this point, an angle between the two extension lighting components 20 and the main lighting member 10 is 0 degrees, thereby significantly shortening an overall length of the plant growing lamp and effectively reducing an occupied space thereof. When in an unfolded state, the two extension lighting components 20 extend horizontally relative to the main lighting member 10, an angle α between the two extension lighting components 20 and the main lighting member 10 is an obtuse or greater than 180 degrees, thereby forming a wider lighting coverage area thereof.

It benefits from the above folding design, the plant growing lamp can be stored and transported by holding the two extension lighting components 20 onto the main lighting member 10, thereby greatly reducing a space occupation thereof. Whether it is a corner storage in indoor home planting scenarios or batch transportation in large-scale planting bases, it can significantly reduce space costs. According to actual calculations, compared to a conventional non-foldable plant growing lamp, space utilization of the foldable plant growing lamp of the present disclosure is significantly improved under the same storage or transportation conditions.

In addition, the expansion lighting component 20 that is unfolded supports flexible adjustment from multiple angles and is adopted to plant planting areas with different shapes and areas. For large-scale flat planting scenarios, the extension lighting component 20 can be unfolded to over 180 degrees to ensure uniform lighting coverage thereof. In a three-dimensional multi-layer planting environment, by adjusting an angle of each extension lighting component 20, sufficient lighting can be accurately provided for each layer of plants, thereby effectively eliminating lighting blind spots and meeting lighting needs of plant growth in all directions.

Furthermore, the main lighting member 10 includes two first installation arms 11 opposite to each other, and a plurality of first lighting modules 12 arranged between the two first installation arms 11, two ends of the first lighting module 12 respectively mounted on the two first installation arms 11; and wherein each of the two extension lighting components 20 includes two second installation arms 21 opposite to each other, and a plurality of second lighting modules 22 arranged between the two second installation arms 21, two ends of the second lighting module 22 respectively mounted on the two second installation arms 21, and the two second installation arms 21 corresponding to the two first second installation arms 11, respectively.

Specifically, the main lighting member 10 consists of the two first installation arms 11 and the plurality of first lighting modules 12, and the two first installation arms 11 are arranged at interval. The plurality of first lighting modules 12 is arranged between the two first installation arms 11 in an orderly manner, and the two ends of each of the plurality of first lighting modules 12 are firmly mounted on corresponding first installation arms 11, to form a light-emitting unit array of the main lighting member 10. The extension lighting component 20 also adopts a similar structure, and includes the two second installation arms 21 opposite to each other and the plurality of second lighting modules 22. The two ends of the second lighting module 22 are respectively mounted on the two second installation arms 21 to ensure stability of lighting output. Moreover, the two second installation arms 21 correspond one-to-one with the two first installation arms 11 of the main lighting member 10, for providing a structural basis for a rotation, folding and unfolding of the extension lighting component 20 relative to the main lighting member 10.

Referring to FIGS. 2-3 and FIGS. 5-6, the plant growing lamp further includes two rotation adjusting members 40 respectively arranged on the two sides of the main lighting member 10, and configured to rotatably connect the extension lighting component 20 and the main lighting member 10.

Specifically, the plant growing lamp provides the two rotation adjusting members 40 respectively set on the two sides of the main lighting member 10, which is served as key components to connect the extension lighting component 20 and the main lighting member 10. The two rotation adjusting members 40 not only realize a rotational connection between the extension lighting component 20 and the main lighting member 10, but also control a rotation angle and an amplitude of the extension lighting component 20, for ensuring stability and flexibility of the extension lighting component 20 during in a folding and unfolding process. By providing the two rotation adjusting members 40, the extension lighting component 20 can be adjusted to an appropriate angle according to actual usage needs, for further improving accuracy and effectiveness of lighting coverage thereof.

Furthermore, each of the two rotation adjusting members 40 includes two rotating modules 41 correspondingly arranged between the two first installation arms 11 and two second installation arms 21, respectively, and configured to make the two second installation arms 21 rotatable relative to the two first installation arms 11.

Specifically, in an embodiment of the present disclosure, each of the two rotation adjusting members 40 is composed of the two rotating modules 41. One of the two rotating modules 41 is set between one of the two first installation arms 11 and one of the two second installation arms 21, and the other rotating module 41 is set between the other first installation arm 11 and the other second installation arm 21. The two rotating modules 41 are configured to drive the two second installation arms 21 to rotate synchronously relative to the two first installation arms 11, thereby driving the second lighting module 22 that is set between the two second installation arms 21 to rotate.

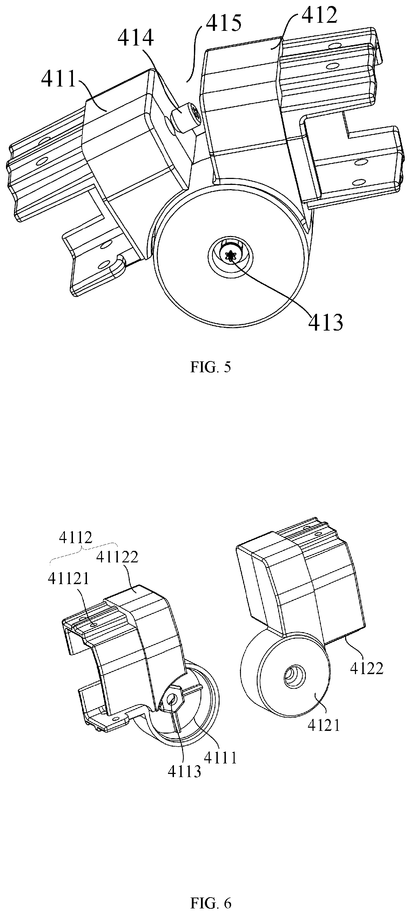

Referring to FIG. 5 and FIG. 6, each of the two rotating modules 41 includes a first connecting element 411, a second connecting element 412 and a bolt 413, the first connecting element 411 installed on an end of the first installation arm 11, the second connecting element 412 installed on an end of the second installation arm 12, the bolt 413 passing through the first connecting element 411 and the second connecting element 412, and configured to lock the first connecting element 411 and the second connecting element 412; and wherein the first connecting element 411 and the second connecting element 412 are rotatable around the bolt 413 to adjust an angle between the main lighting member 10 and the two extension lighting components 20.

Specifically, each of the two rotating modules 41 is composed of the first connecting element 411, the second connecting element 412 and the bolt 413. The first connecting element 411 is securely installed on the end of the first installation arm 11, while the second connecting element 412 is installed on the end of the second installation arm 21. The bolt 413 passes through the first connecting element 411 and the second connecting element 412 in sequence, and can be tightened or loosened to lock or unlock the first connecting element 411 and the second connecting element 412. When it is necessary to adjust the angle of the extension lighting component 20, by loosening the bolt 413, the first connecting element 411 and the second connecting element 412 can flexibly rotate around the bolt 413, thereby adjusting the angle between the main lighting member 10 and the extension lighting component 20 to meet different lighting requirements. After the angle is completely adjusted, tightening the bolt 413 to firmly lock the first connecting element 411 and the second connecting element 412, thereby ensuring that the extension lighting component 20 remains stable during being used, without shaking or angular deviation. By providing such above structural design, the rotation adjusting member 40 is provided that the two second installation arms 21 can flexibly rotate relative to the two first installation arms 11, thereby driving the extension lighting component 20 to complete folding and unfolding actions. At the same time, the rotation adjusting member 40 can also accurately control the rotation angle and the amplitude of the extension lighting component 20, thereby ensuring a tight fit of the components during in the folding and storage process, and reducing the space occupation thereof. When the extension lighting component 20 is unfolded to be used, it can ensure for stable positioning the extension lighting component 20 and prevent shaking during in a multi-angle adjustment process, thereby ensuring precise and efficient light coverage to meet requirements of different plant planting scenarios in all aspects.

Furthermore, the first connecting element 411 includes a first rotating portion 4111 and a first fixing portion 4112 connected to each other, the first fixing portion 4112 arranged on a side of the first rotating portion 4111 and including an insertion portion 41121 and an outer portion 41122 connected to each other, the insertion portion 41121 inserted into the first installation arm 11, and the outer portion 41122 located outside the first installation arm 11. The second connecting element 412 includes a second rotating portion 4121 and a second fixing portion 4122 connected to each other, the second rotating portion 4121 attached to the first rotating portion 4111, the second fixing portion 4122 opposite to the first fixing portion 4112, each of the first rotating portion 4111 and the second rotating portion 4121 including an installation hole 4113, and the bolt 413 passing through the installation holes 4113 to lock the first rotating portion 4111 and the second rotating portion 4121.

Specifically, the first connecting element 411 includes the first rotating portion 4111 and the first fixing portion 4112 that are integrated with each other. The first fixing portion 4112 is located on the side below the first rotating portion 4111. The first rotating portion 4111 is configured to drive the first fixing portion 4112 to rotate, so as to adjust the angle between the first connecting element 411 and the second connecting element 412. The first fixing portion 4112 is composed of the insertion portion 41121 and the outer portion 41122. The insertion portion 41121 extends towards the first installation arm 11 and is inserted into the first installation arm 11, to firmly connect with the first installation arm 11. A fixing method can be fixed with screws. The outer portion 41122 is located on the side of the first installation arm 11 that faces the second installation arm 21. A structure of the second connecting element 412 is similar to that of the first connecting element 411. The second connecting element 412 includes the second rotating portion 4121 and the second fixing portion 4122 that are integrally formed. The second rotating portion 4121 is tightly attached to the first rotating portion 4111, to form a rotational fit therebetween. The second fixing portion 4122 is arranged opposite to the first fixing portion 4112, for forming a symmetrical structure in space. Each of the first rotating portion 4111 and the second rotating portion 4121 includes the installation hole 4113, and the bolt 413 passes through the two installation holes 4113 in sequence. By tightening the bolt 413, the first rotating portion 4111 and the second rotating portion 4121 can be tightly locked with each other. When it is necessary to adjust the angle of the extension lighting component 20, the bolt 413 is loosened, so that the first rotating portion 4111 and the second rotating portion 4121 can flexibly rotate around an axis of the bolt 413, thereby changing the angle between the first installation arm 11 and the second installation arm 21. After the angle is completely adjusted, the bolt 413 is tightened to securely lock the first rotating portion 4111 and the second rotating portion 4121, thereby ensuring that the extension lighting component 20 remains stable during being used, without shaking or angular deviation.

Furthermore, the rotating module 41 further includes an adjusting element 414 installed on the first connecting element 411, one end of the adjusting element 414 screwed into the first fixing portion 4112, and the other end of the adjusting element 414 abutted against the second fixing portion 4122, wherein an angle between the first fixing portion 4112 and the second fixing portion 4122 is adjusted by adjusting a depth that the adjusting element 414 is screwed into the first fixing portion 4112, so as to adjust an illumination angle of each of the two extension lighting components 20.

Specifically, in an embodiment of the present disclosure, the adjusting element 414 that is added to the rotating module 41 is installed on the first connecting element 411, with one end screwed into the first fixing portion 4112 and the other end in contact with the second fixing portion 4122. In an actual usage, the depth that the adjusting element 414 is screwed into the first fixing portion 4112 can be changed by rotating the adjusting element 414. The other end of the adjusting element 414 is in contact with the second fixing portion 4122. Therefore, by adjusting the rotation of the adjusting element 414, so that the angle formed between the first fixing portion 4112 and the second fixing portion 4122 can be adjusted, thereby changing the angle between the first installation arm 11 and the second installation arm 21. When it is necessary to adjust the angle of the extension lighting component 20, first by loosening the bolt 413, the first rotating portion 4111 and the second rotating portion 4121 can flexibly rotate around the axis of the bolt 413 for performing a large-scale angle adjustment. And then, a small amplitude and a high-precision angle calibration can be performed through adjusting the adjusting element 414. After the adjustment is completed, by tightening the bolt 413, the first rotating portion 4111 and the second rotating portion 4121 are firmly locked to each other, so as to ensure that the extension lighting component 20 remains stable during being used, without shaking or angle deviation. With this structural design, the rotation adjusting member 40 is provided to obtain flexible rotation of the two second installation arms 21 relative to the two first installation arms 11, thereby driving the extension lighting component 20 to complete folding and unfolding actions, while also achieving fine adjustment of the lighting angle thereof. The adjusting element 414 can be a screw or a bolt.

Furthermore, a gap 415 is formed between the first fixing portion 4112 and the second fixing portion 4122.

Specifically, the gap 415 is formed between the first fixing portion 4112 and the second fixing portion 4122, to provide a spatial basis for a relative rotation between the first fixing portion 4112 and the second fixing portion 4122, thereby allowing the first installation arm 11 and the second installation arm 21 to rotate at an angle α greater than 180 degrees, and achieving flexible rotation towards larger angles. When it is necessary to expand a lighting coverage range, the second installation arm 21 can rely on the gap 415 to drive the extension lighting component 20 to rotate significantly relative to the first installation arm 11 until the angle α is greater than 180 degrees. In an actual operation process, when it needs to expand a lighting coverage area, a rotation constraint can be released by loosening the bolt 413. At this time, the second installation arm 21 can drive the extension lighting component 20 to rotate and adjust significantly relative to the first installation arm 11 through that the bolt 413 is taken as the axis and a reserved activity margin is occurred by the gap 415, thereby extending the illumination to a larger area of plant planting, and meeting special requirements for illumination ranges in different planting scenarios.

Furthermore, each of the first lighting module 12 and the second lighting module 22 includes a heat dissipation shell 121, an LED light board 122 and two first end caps 123, the LED light board 122 installed on the heat dissipation shell 121, and the two first end caps 123 of the first lighting module 12 respectively arranged on two ends of the heat dissipation shell 121 of the first lighting module 12, and fixedly installed on the first installation arms 11, the two first end caps 123 of the second lighting module 22 respectively arranged on two ends of the heat dissipation shell 121 of the second lighting module 22, and fixedly installed on the second installation arms 21.

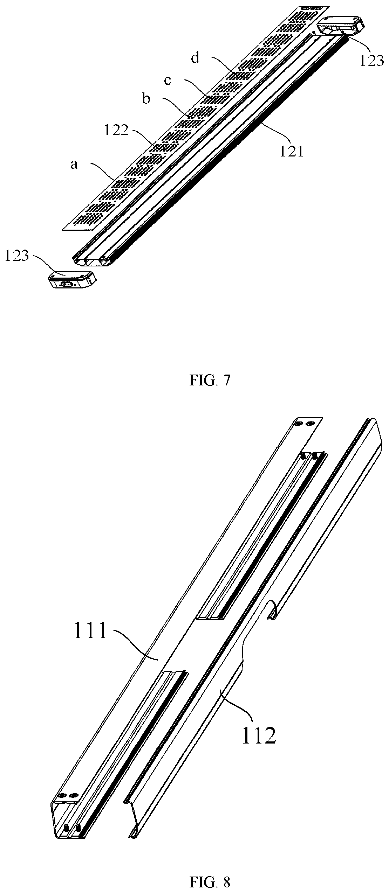

Specifically, referring to FIG. 7, the first lighting module 12 and the second lighting module 22 adopt a unified modular structure design, and consist of the heat dissipation shell 121, the LED light board 122 and the two first end caps 123. The LED light board 122, as a core light-emitting component, is firmly installed on a surface of the heat dissipation shell 121 through dedicated fixing elements, for ensuring that light-emitting units can continuously and stably output spectrum to meet the requirements of plant growth. The heat dissipation shell 121 is made of high-efficiency thermal conductive materials, such as aluminum alloy or copper alloy, and is manufactured through precision die-casting or stamping processes. The heat dissipation shell 121 can quickly dissipate heat generated by the LED light board 122 to surrounding environments, when the LED light board 122 works, thereby effectively avoiding problems such as light source decay and a shortened lifespan caused by a high temperature, and ensuring a long-term stable operation of the foldable plant growing lamp. The two first end caps 123 are respectively installed at both ends of the heat dissipation shell 121 of the corresponding lighting module, not only to protect internal electronic components, but also to undertake a key function of connecting and fixing with the corresponding installation arm. During in a specific installation process, the two first end caps 123 of the first lighting module 12 are securely connected to the two first installation arms 11 of the main lighting member 10 through screws, snap connections or other suitable mechanical fixing methods. Similarly, the two first end caps 123 of the second lighting module 22 are correspondingly installed on the second installation arms 21 of the extension lighting component 20. This fixing connection method between the end cap and the installation arm ensures structural stability of the lighting module during folding, unfolding and adjusting the angle of the foldable plant growing lamp, and facilitates subsequent disassembly, maintenance and module replacement, thereby effectively improving practicality and a service life of the foldable plant growing lamp.

Referring to FIG. 8, each of the first installation arm 11 and the second installation arm 12 includes a U-shaped frame 111, and a cover plate 112 mounted on the U-shaped frame 111 to form a square frame structure thereof.

Specifically, the first installation arm 11 and the second installation arm 21 are designed with a combination structure of the same U-shaped frame 111 and the cover plate 112. The U-shaped frame 111 is made of high-strength aluminum alloy or engineering plastic through an extrusion molding process, with a U-shaped cross-section thereof. Inner sides of two side walls of the U-shaped frame 111 are equipped with evenly distributed card slots or guiding rails for precise docking with the cover plate 112. The cover plate 112 is a flat plate design, with materials matching with the U-shaped frame 111, and edges of the cover plate 112 are processed with buckles or sliders corresponding to the slots of the U-shaped frame 111. During in an installation process, the cover plate 112 is slid into the guiding rail from an end of the U-shaped frame 111 until the buckle is fully engaged with the slot, to form a closed square frame structure thereof. This design not only ensures an overall strength and rigidity of the installation arm, for effectively supporting a weight of the lighting module, but also provides an enclosed space for internal wires, for avoiding safety hazards caused by exposed wires. Four corners of the square frame structure are designed with circular arc transitions, which not only enhances impact resistance of the structure, but also avoids accidental injuries caused by sharp edges. Furthermore, wires can be placed inside the square frame that is formed by the first installation arm 11 and the second installation arm 21, which are responsible for connecting the power supply member 30 with the first lighting module 12 and the second lighting module 22, for achieving transmission of power and control signals. The wires are hidden inside the frame, it not only effectively avoids damage caused by external collisions and pulling, improves stability and safety of a circuit system thereof, but also makes the appearance of the entire plant growing lamp more concise and orderly. At the same time, it is also convenient to protect the wires during in the folding and unfolding process, preventing problems such as wire entanglement and short circuits from being occurred.

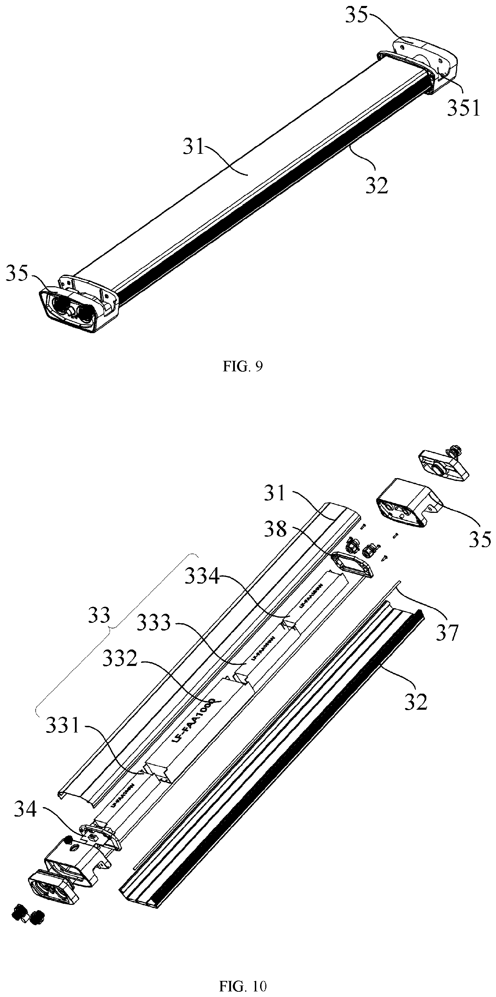

Referring to FIG. 9 to FIG. 11, the power supply member 30 includes a bottom housing 31, a top housing 32, a drive power module 33, a control board 34 and two second end caps 35, the top housing 32 installed on the bottom housing 31 to form a receiving room 36 for receiving the power module 33 and the control board 34 therein, the two second end caps 35 respectively set at both ends of the bottom housing 31 and the top housing 32, and respectively installed on the first installation arms 11.

Specifically, the power supply member 30 adopts a modular and enclosed structural design, which is mainly composed of the bottom housing 31, the top housing 32, the drive power module 33, the control board 34 and the two second end caps 35. The bottom housing 31 serves as a basic load-bearing component and is injection molded with a high-strength insulation material. The bottom housing 31 is equipped with precise positioning grooves and fixing columns to position and fix the drive power module 33 and the control board 34. The top housing 32 is installed on the bottom housing 31 through screw fastening or snap connections, together with the bottom housing 31, to form the closed receiving room 36, thereby effectively protecting the internal drive power module 33 and the control board 34 from being interfered by external factors such as dust and moisture interference, and ensuring the stable operation of the power supply member 30. The drive power module 33 is responsible for converting an external input power supply into a stable voltage and a current to be suitable that the LED light board 122 works, which integrates efficient power conversion circuits and over-voltage, over-current and short-circuit protection devices internally, so as to effectively improve a power conversion efficiency and extend the service life of the LED light board 122. The control board 34 is equipped with an intelligent control chip, which can achieve functions such as brightness adjustment, spectral switching and timed switching of the foldable plant growing lamp. It can flexibly adjust lighting parameters to meet the requirements of different plant growth stages through external control terminals or control buttons of the plant growing lamp. The two second end caps 35 are respectively installed at both ends of the bottom housing 31 and the top housing 32, and the structures are adapted to installation structures of the first installation arm 11 and the second installation arm 21.

Furthermore, each of the bottom housing 31 and the top housing 32 is a groove-shaped structure, the bottom housing 31 and the top housing 32 opposite to each other to form a semi-closed structure with openings at both ends thereof; and wherein two ends of the top housing 32 along a width direction thereof are abutted against two ends of the bottom housing 31 along a width direction thereof, and a clamping slot 321 is provided on an inner side of the top housing 32 that is close to the two ends of the top housing 32, a clamping portion 311 provided on the bottom housing 31 and corresponding to the clamping slot 321, and the clamping portion 311 inserted into the clamping slot 321.

Specifically, the bottom housing 31 and the top housing 32 of the power supply member 30 serve as core protective and load-bearing structures, both of which adopt a groove-shaped design. The bottom housing 31 and the top housing 32 are cooperated to construct a stable semi-enclosed space. The bottom housing 31 and the top housing 32 are distributed in a mirror symmetric manner in spatial layout. When the bottom housing 31 and the top housing 32 are arranged relative to each other, opening directions of the grooves of the bottom housing 31 and the top housing 32 are opposite to each other, for forming a semi-closed cavity with two openings at both ends thereof. This design can ensure convenient installation of core components such as the drive power module 33 and the control board 34, while quickly transition to a fully enclosed protective form through subsequent assembly of the two second end caps 35 at both ends thereof, thereby effectively resisting external dust and moisture intrusion, and providing a stable operation environment for internal electronic components thereof.

Furthermore, an arc-shaped cavity 322 is formed on a side wall of the clamping slot 321, and a sealing strip 37 is installed inside the arc-shaped cavity 322, the sealing strip 37 attached to the clamping portion 311, and configured to seal the two ends of the bottom housing 32 and the top housing 31 along the width direction thereof.

Specifically, the arc-shaped cavity 322 is formed on the side wall of the clamping slot 321, to form a roughly circular cavity structure. The cylindrical sealing strip 37 is installed inside the arc-shaped cavity 322, and made of highly elastic silicone rubber, which has good weather resistance, corrosion resistance and aging resistance. During an assembly process of the bottom housing 31 and the top housing 32, as the clamping portion 311 is inserted into the clamping slot 321, the sealing strip 37 is compressed to generate elastic deformation, so as to tightly attach to the surface of the clamping portion 311, thereby forming a sealing barrier at both ends of the bottom housing 31 and the top housing 32 in the width direction thereof. This sealing barrier can effectively prevent dust particles, water vapor and other impurities from entering the interior of the power supply member 30 through a joint gap between the bottom housing 31 and the top housing 32.

Furthermore, a gasket 38 is also provided between the two ends of the bottom housing 31 and the top housing 32, and the two second end caps 35. The sealing gasket 38 is configured to seal gaps between the two ends of the bottom housing 31 and the top housing 32, and the two second end caps 35. Specifically, in order to further enhance a sealing performance of the power supply member 30, the gaskets 38 is provided between the two ends of the bottom housing 31 and the top housing 32, and the two second end caps 35. The gasket 38 is made of foam silicone materials that has characteristics of high elasticity and low compression permanent deformation. It can still maintain a good sealing performance in a temperature range of -40 °C to 200 °C. The gasket 38 is a circular structure, an inner diameter of the gasket 38 is precisely matched with an outer diameter of the ends of the bottom housing 31 and the top housing 32, and an outer diameter of the gasket 38 is consistent with the installation groove that is arranged on the inner side of the second end cap 35.

Furthermore, the second end cap 35 includes an installation chamber 351, and the first installation arm 11 passes through the installation chamber 351 and is installed inside the installation chamber 351.

Specifically, one surface of the second end cap 35 is recessed towards the other surface of the second end cap 35 to form the installation chamber 351 that penetrates the first end cap 123. A width of the installation chamber 351 is adapted to that of the first installation arm 11, so that the first installation arm 11 can pass through the installation chamber 351 and be fixedly installed inside the installation chamber 351.

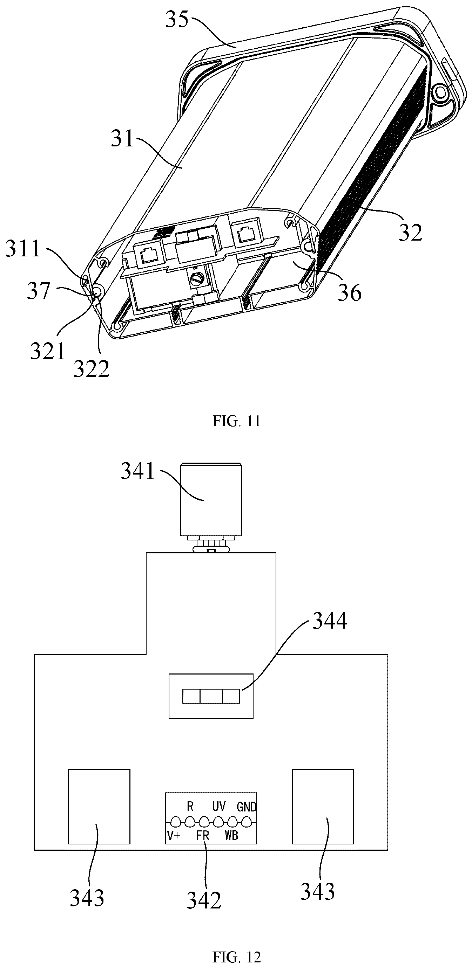

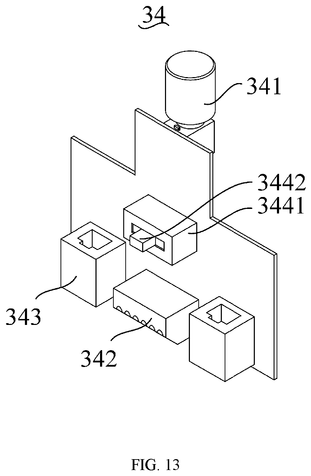

Referring to FIG. 12 and FIG. 13, a potentiometer 341 is arranged on the control board 34 and configured to control an output current of a circuit of the control board 34, thereby adjusting a brightness of the LED light board 122.

Specifically, the control board 34 is equipped with the potentiometer 341, an electrical terminal 342, a plurality of RJ45 network ports 343, and a control switch 344. The drive power module 33 includes a first drive power 331, a second drive power 332, a third drive power 333 and a fourth drive power 334. The electrical terminal 342 includes a first interface connected to the first drive power 331, a second interface connected to the second drive power 332, a third interface connected to the third drive power 333, and a fourth interface connected to the fourth drive power 334. Correspondingly, the first drive power 331, the second drive power 332, the third drive power 333 and the fourth drive power 334 are respectively connected to a first light bead a, a second light bead b, a third light bead c and a fourth light bead d that are set on the LED light board 122, so that a first type of light, a second type of light, a third type of light and a fourth type of light with different frequency bands are respectively adjusted, wherein signals that are output from the first to fourth drive powers are 0-10V.

In an embodiment of the present disclosure, the first interface is a R interface, the second interface is an FR interface, the third interface is a UV interface, and the fourth interface is a W+B4 interface. The first light bead a, the second light bead b, the third light bead c and the fourth light bead d are respectively R light beads, FR light beads, UV light beads and W+B4 light beads. The first type of light is a red light, the second type of light is a far-red light, the third type of light is a UV light, and the fourth type of light is a white and blue light.

In other embodiments of the present disclosure, the four types of light beads mentioned above can be installed on the LED light board 122, which can respectively adjust four different frequency bands of light. The potentiometer 341 is a rotary-knob-type structure.

The control switch 344 includes an electronic switch 3441 and a handle 3442, the electronic switch 3441 fixedly installed on the control board 34, and the handle 3442 connected to the electronic switch 3441 and configured to be passively toggled to change the state of electronic switch 3441 to change a state of the electronic switch 3441.

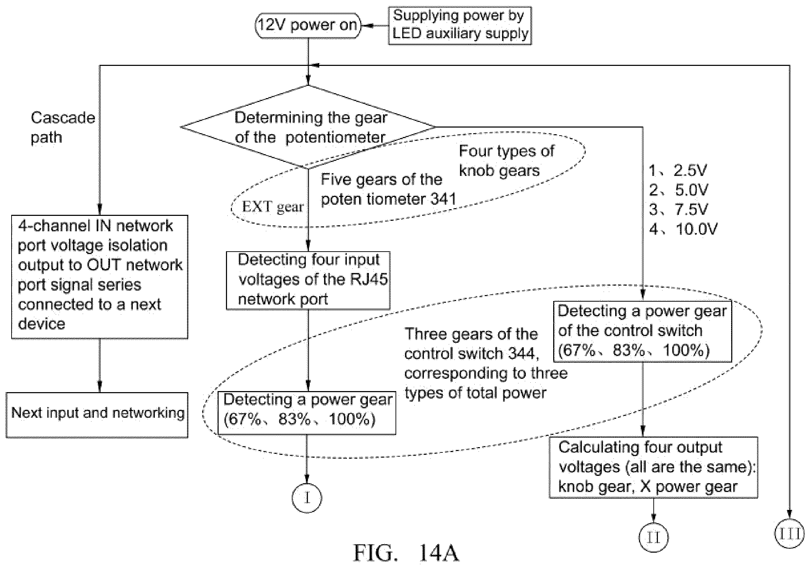

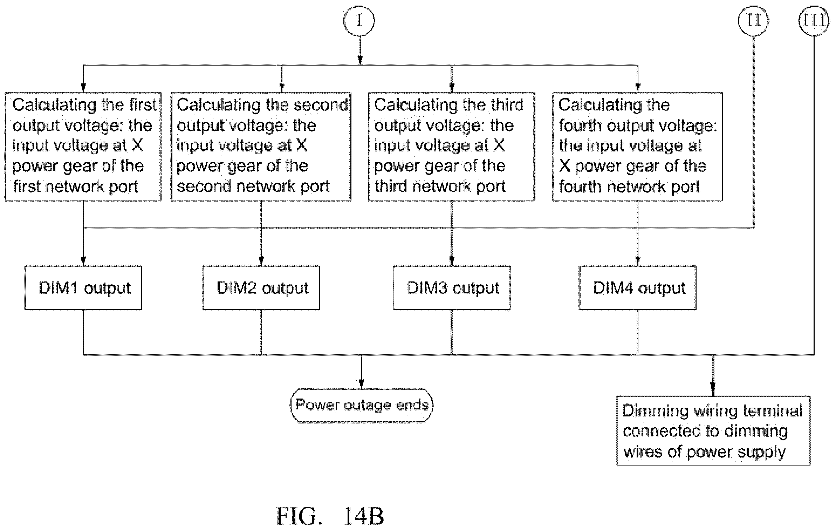

A control logic of the control board 34 is shown in FIG. 14A and FIG. 14B. The potentiometer 341 has five gears that are an EXT (Extension) gear, a 25% gear, a 50% gear, a 75% gear, and a 100% gear. The control switch 344 has three independent gears that are controlled independently of each other: a 74.1% gear, a 83.3% gear, and a 100% gear. The RJ45 network port 343 can be connected to an external control panel and has four channels that are: a UV channel, a R channel, a W+B channel and an FR channel. The electrical terminal 342 is configured to dim light and has four dimming interfaces that are an UV interface, a R interface, a W+B interface and an FR interface, which are respectively connected to dimming signal wires of a UV lamp power supply (for receiving signals from the UV channel), a red lamp power supply (for receiving signals from the R channel), a white+blue lamp power supply (for receiving signals from the W+R channel), and a far-red lamp power supply (for receiving signals from the FR channel). The dimming interfaces of the electrical terminal 342 correspond to the four UV, R, W+B, and FR channels in sequence. The UV lamp power supply (for receiving signals from the UV channel), the red lamp power supply (for receiving signals from the R channel), the white+blue lamp power supply (for receiving signals from the W+R channel), and the far-red lamp power supply (for receiving signals from the FR channel) are configured to independently drive the four types of light beads that are the R light bead, FR light bead, UV light bead, and the W+B4 light bead, to emit light. During power on operation:

firstly, it is to determine whether the potentiometer 314 is at the EXT gear. When the potentiometer 341 is at the EXT gear, a preset software logic of the control board 34 is to identify whether there is an external control signal on the RJ45 network port 343. The external control signal mainly transmits a spectral ratio of each channel. When there is the external control signal on the RJ45 network port 343, the software logic determines a current gear that the control switch 344 is occurred in, and the control switch 344 is configured to control a total lighting intensity of the foldable plant growing lamp. If the control switch 344 is at the 74.1% gear, it corresponds to a lighting intensity of the foldable plant growing lamp that is 74.1% of a full power. Because the UV, R, W+B, and FR channels mentioned above are independent to each other, so that the four channels can accept independent control signals from the RJ45 network port 343. For example, spectral components in the four channels are set to a first adjustment mode: the spectral component of the UV channel is 40%, the spectral component of the R channel is 80%, the spectral component of the W+B channel is 50%, and the spectral component of the FR channel is 70%. The software logic calculates an output power of the UV lamp power supply (used to transmit signals of the UV channel), an output power of the red lamp power supply (used to transmit signals of the R channel), an output power of the white+blue lamp power supply (used to transmit signals of the W+R channel), and an output power of the far-red lamp power supply (used to transmit signals of the FR channel) are respectively corresponding the four different channels based on the total power of 74.1%. The output power of the channel corresponds to voltage information that is contained in the control signals of the channel, for example, a maximum voltage of 10V corresponds to the power of 100%, while a voltage of 2.5V corresponds to the power of 25%. Afterwards, the preset software logic combines different control signals that come from the four channels and the gears of the control switch 344 to form a new dimming control signal. The total output power of 74.1% is taken as an example, under a control of the software logic, the voltage that is output from the channel is calculated as follows: the voltage equals to the maximum voltage of the channel multiply by a proportion of the spectral component that is corresponding to the channel, and the lighting intensity (corresponding to the output total power of lighting).

In the first adjustment mode, when all the maximum voltages of the four channels are 10V, the lighting intensity of the plant growing lamp is 74.1%. Under the control of the software logic, the voltage that is output from the UV channel is 2.964 V, which is 10 multiply by 40% and 74.1%. Under the control of the software logic, the voltage that is output from the R channel is 5.928V, which is 10 multiply by 80% and 74.1%; under the control of the software logic, the voltage that is output from the W+B channel is 3.705V, which is 10 multiply by 50% and 74.1%; under the control of the software logic, the voltage that is output from the FR channel is 5.187V, which is 10 multiply by 70% and 74.1%. And then, the control signals with corresponding voltages that are calculated from the four channels are transmitted by the power terminal 342 to the corresponding four driving power supplies through their corresponding channels thereof, for example, the control signals are respectively output to the UV lamp power supply, the red lamp power supply, the white+blue lamp power supply, and the far-red lamp power supply through a DIM1 output port, a DIM2 output port, a DIM3 output port and a DIM4 output port, thereby controlling the UV lamp power supply, the red lamp power supply, the white+blue lamp power supply, and the far-red lamp power supply to respectively output driving currents corresponding to 74.1% of their respective maximum output currents. Because a fact that the lighting intensity of the foldable plant growing lamp is controlled by the driving current that is input, when the driving current that is output by each of the UV lamp power supply, the red light power supply, the white+blue lamp power supply and the far-red light power supply is corresponding to 74.1% of the maximum current, the foldable plant growing lamp outputs 74.1% of the power for different frequency bands, the total power will still be 74.1%, thus achieving a purpose of adjusting the lighting intensity of the foldable plant growing lamp.

In addition, the dimming mode that the external control signal is connected through the RJ45 network port 343 can be adjusted according to different spectral ratios, because the red lamp, the far-red lamp, the UV lamp and the white+blue lamp can be adjusted according to different spectral ratios. For example:
The above first adjustment mode (74.1% of the total power is unchanged): the proportion of the spectral component output from the UV channel is 40%, the proportion of the spectral component output from the R channel is 80%, the proportion of the spectral component output from the W+B channel is 50%, and the proportion of the spectral component output from the FR channel is 70%.

In the above first adjustment mode: the voltage of the UV channel is: 10*40%*74.1%=2.964V; the voltage of the R channel is: 10*80%*74.1%=5.928V; the voltage of the W+B channel is: 10*50%*74.1%=3.705V; the voltage of the FR channel is: 10*70%*74.1%=5.187V.

A second adjustment mode (74.1% of the total power is unchanged): it is assumed that the control signal of the RJ45 port 343 controls the proportion of the spectral component that is output from the UV channel to be 50%, the proportion of the spectral component that is output from the R channel to be 65%, the proportion of the spectral component that is output from the W+B channel output to be 65%, and the proportion of the spectral component that is output from the FR channel to be 75%.

Therefore, in the second adjustment mode: the voltage of the UV channel is: 10*50%*74.1%=3.705V; the voltage of the R channel is: 10*65%*74.1%=4.816V; the voltage of the W+B channel is: 10*65%*74.1%=4.816V; the voltage of the FR channel is: 10*75%*74.1%=5.557V.

In the first adjustment mode one and the second adjustment mode, even 74.1% of the total output power of the foldable plant growing lamp is unchanged, the voltages that are output from the four channels are still different. It is mainly that the proportion of the spectral component in each of the four channels is different, which will result in different driving currents that are output by the UV lamp power supply, the red lamp power supply, the white+blue lamp power supply, and the far-red lamp power supply. Therefore, in the first adjustment mode and the second adjustment mode, the lighting intensities of the UV lamp, the red lamp, the white+blue lamp and the far-red lamp are different. After combination, the first adjustment mode and the second adjustment mode show different spectra and colors, but the total lighting intensity still corresponds to 74.1% of the total lighting intensity. In this way, the proportions of the four types of LED lamps in the spectrum can be changed, that is, the foldable plant growing lamp can arbitrarily change the spectrum and the lighting intensity thereof. This mode is an innovative design that the foldable plant growing lamp is to be compatible with different plant spectral requirements, corresponding to different growth stages of plants, thereby making plants growth faster.

Secondly, When the potentiometer 341 is not at the EXT gear, it means that only the potentiometer 341 is configured to control the lighting intensity. At this time, the external control signal on the RJ45 network port 343 is shielded or isolated through the software logic, and the signal of the RJ45 network port 343 is non-participation of control. The preset software logic of the control board 34 determines which gear of the 25% gear, the 50% gear, the 75% gear and the 100% gear that the rotary potentiometer 341 is switched to, that is, the current gear that the potentiometer 341 is occurred in. The proportion of the spectral component in each channel is output according to a fixed spectral component proportion corresponding to the current gear of the potentiometer 341 according to a fixed proportion spectral component that is corresponding to the current gear of the potentiometer 341. For example, when the potentiometer 341 is at the 50% gear, the proportions of the spectral components of the four channels are 50%, that is, the proportion of the spectral component of the UV channel is 50%, the proportion of the spectral component of the R channel is 50%, the proportion of the spectral component of the W+B channel is 50%, and the proportion of the spectral component of the FR channel is 50%. The software logic determines the current gear of the control switch 344 at this time, and then combines to form a new dimming control signal, and outputs the dimming control signal uniformly to dimming wires of the UV lamp power supply, the red lamp power supply, the white+blue lamp power supply, and the far-red lamp power supply through the electrical terminal 342, thereby controlling output currents of the four power supplies and achieving to adjust the lighting intensity of the foldable plant growing lamp. For example, the potentiometer 341 is switched to the 50% gear and the control switch 344 is at the 83.3% gear, the output voltages of the four channels connected to the electrical terminal 342 are the same, all of the output voltages of the four channels are 10*50%*83.3%=4.165V, which will lower the current of the four power supplies to around 42% of the maximum current (the maximum voltage of 10V is adjusted to 4.165V, which is about 42% of the maximum voltage), and a brightness of the foldable plant growing lamp is also adjusted to around 42%. The dimming mode of the rotary-knob potentiometer 341 is provided to only changes the brightness of the foldable plant growing lamp and the spectrum remains unchanged, because the four types of LED lamps, that are the red lamp, the far-red lamp, the UV lamp, and the white+blue lamp are changed according to the same proportion.

The potentiometer 341 can extend out of the second end cap 35 and is configured to adjust the output currents of the four drive power supplies, to adjust the brightness between 0% and 100%.

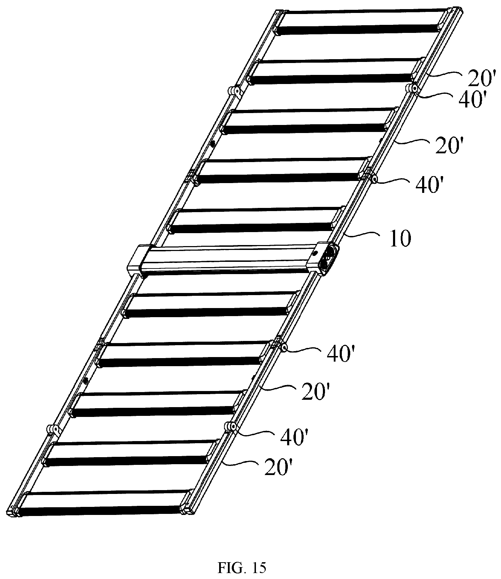

Referring to FIG. 15, a foldable plant growing lamp 100' according to a second embodiment of the present disclosure is provided. The foldable plant growth lamp 100' of the second embodiment has a similar structure, functions and beneficial effects to the foldable plant growing lamp of the first embodiment. A difference is only that the foldable plant growth lamp 100' of the second embodiment includes n extension lighting components 20', and a rotation adjusting member 40' is also provided between two adjacent extension lighting components 20' to adjust an angle between the two adjacent extension lighting components 20', wherein n is an integer greater than or equal to two. That is to say, in the foldable plant growing lamp 100' of the second embodiment, not only the rotation adjusting member 40' is arranged between the main lighting member 10 and the extension lighting component 20 that is close to the main lighting member 10, but also the rotation adjusting member 40' is arranged between two adjacent extension lighting components 20'. The rotation adjusting member 40' can not only adjust the angle between the main lighting member 10 and the extension lighting component 20' that is close to the main lighting member 10, but also adjust the angle between two adjacent extension lighting components 20'. The number of the rotation adjusting members 40' is m, wherein m is an integer greater than or equal to two.

Although the features and elements of the present disclosure are described as embodiments in particular combinations, each feature or element can be used alone or in other various combinations within the principles of the present disclosure to the full extent indicated by the broad general meaning of the terms in which the appended claims are expressed. Any variation or replacement made by one of ordinary skill in the related art without departing from the spirit of the present disclosure shall fall within the protection scope of the present disclosure.

## Claims

1. A foldable plant growing lamp, which is **characterized in that**, the foldable plant growing lamp comprising:
a main lighting member (10);
n extension lighting components (20 20'), two adjacent extension lighting components (20 20') rotatably connected with each other, and the extension lighting components (20 20') that are close to the main lighting member (10) rotatably arranged on two sides of the main lighting member (10), respectively, wherein n is an integer greater than or equal to two;
a power supply member (30) arranged on the main light member (10) and electrically connected to the main lighting member (10) and the n extension lighting components (20 20'); and wherein
the n extension lighting components (20 20') are rotatable relative to the main lighting member (10), and two adjacent extension lighting components (20 20') are rotatable with each other, so that the n extension lighting components (20 20') are folded and unfolded relative to the main lighting member (10), and two adjacent extension lighting components (20 20') are also folded and unfolded with each other; and wherein when the n extension lighting components (20 20') and the main lighting member (10) are folded together, and two adjacent extension lighting components (20 20') are folded, the foldable plant growing lamp is stored and transported to save a space that is occupied by the plant growing lamp, and when the n extension lighting components (20 20') and the main lighting member (10) are unfolded, and two adjacent extension lighting components (20 20') are also unfolded, the foldable plant growing lamp is used to illuminate plants.

2. The foldable plant growing lamp according to claim 1, which is **characterized in that**, the foldable plant growth lamp further comprises m rotating modules (41), wherein the rotating module (41) is arranged between the main lighting member (10) and the extension lighting component (20 20') that is close to the main lighting member (10), and configured to adjust an angle between the main lighting member (10) and the extension lighting component (20 20') , the rotating module (41) arranged between two adjacent extension lighting components (20 20') to adjust an angle between the two adjacent extension lighting components (20 20') , wherein m is an integer greater than or equal to two.

3. The foldable plant growing lamp according to claim 2, which is **characterized in that**, each of the m rotating modules (41) comprises a first connecting element (411), a second connecting element (412) and a bolt (413), the first connecting element (411) installed on an end of the main lighting member (10), the second connecting element (412) installed on an end of the extension lighting component (20 20') that is close to the main lighting member (10), the bolt (413) passing through the first connecting element (411) and the second connecting element (412), and configured to lock the first connecting element (411) and the second connecting element (412); and wherein the first connecting element (411) and the second connecting element (412) are rotatable around the bolt (413) to adjust the angle between the main lighting member (10) and the extension lighting component (20 20'), the first connecting element (411) installed on the end of one of the two adjacent extension lighting components (20 20'), and the second connecting element (412) installed on the end of the other of the two adjacent extension lighting components (20 20'), wherein the first connecting element (411) and the second connecting element (412) are rotatable around the bolt (413) to adjust the angle between the two adjacent extension lighting components (20 20').

4. The foldable plant growing lamp according to claim 3, which is **characterized in that**, the main lighting member (10) comprises two first installation arms (11) opposite to each other, and a plurality of first lighting modules (12) arranged between the two first installation arms (11), two ends of the first lighting module (12) respectively mounted on the two first installation arms (11); and wherein each of the n extension lighting components (20 20') comprises two second installation arms (21) opposite to each other, and a plurality of second lighting modules (22) arranged between the two second installation arms (21), two ends of the second lighting module (22) respectively mounted on the two second installation arms (21).

5. The foldable plant growing lamp according to claim 4, which is **characterized in that**, the first connecting element (411) comprises a first rotating portion (4111) and a first fixing portion (4112) connected to each other, the first fixing portion (4112) arranged on a side of the first rotating portion (4111) and comprising an insertion portion (41121) and an outer portion (41122) connected to each other, the insertion portion (41121) inserted into the first installation arm (11) or one of two adjacent second installation arms (21), and the outer portion (41122) located outside the first installation arm (11) or one of the two adjacent second installation arms (21); and wherein the second connecting element (412) comprises a second rotating portion (4121) and a second fixing portion (4122) connected to each other, the second rotating portion (4121) attached to the first rotating portion (4111), the second fixing portion (4122) opposite to the first fixing portion (4122), each of the first rotating portion (4111) and the second rotating portion (4121) comprising an installation hole (4113), and the bolt (413) passing through the installation holes (4113) to lock the first rotating portion (4111) and the second rotating portion (4121).

6. The foldable plant growing lamp according to claim 5, which is **characterized in that**, the rotating module (41) further comprises an adjusting element (414) installed on the first connecting element (411), one end of the adjusting element (414) screwed into the first fixing portion (4112), and the other end of the adjusting element (414) abutted against the second fixing portion (4122), wherein an angle between the first fixing portion (4112) and the second fixing portion (4122) is adjusted by adjusting a depth that the adjusting element (414) is screwed into the first fixing portion (4112), so as to adjust an illumination angle of each extension lighting component (20 20').

7. The foldable plant growing lamp according to claim 6, which is **characterized in that**, a gap is formed between the first fixing portion (4112) and the second fixing portion (4122).

8. The foldable plant growing lamp according to claim 4, which is **characterized in that**, each of the first lighting module (12) and the second lighting module (22) comprises a heat dissipation shell (121), an LED light board (122) and two first end caps (123), the LED light board (122) installed on the heat dissipation shell (121), and the two first end caps (123) of the first lighting module (12) respectively arranged on two ends of the heat dissipation shell (121) of the first lighting module (12), and fixedly installed on the first installation arm (11), the two first end caps (123) of the second lighting module (22) respectively arranged on two ends of the heat dissipation shell (121) of the second lighting module (22), and fixedly installed on the second installation arm (21).

9. The foldable plant growing lamp according to claim 8, which is **characterized in that**, each of the first installation arm (11) and the second installation arm (21) comprises a U-shaped frame (111), and a cover plate (112) mounted on the U-shaped frame (111), to form a square frame structure thereof.

10. The foldable plant growing lamp according to claim 9, which is **characterized in that**, the power supply member (30) comprises a bottom housing (31), a top housing (32), a drive power module (33), a control board (34) and two second end caps (35), the top housing (31) installed on the bottom housing (32) to form a receiving room (36) for receiving the power module (33) and the control board (34) therein, the two second end caps (35) respectively set at both ends of the bottom housing (31) and the top housing (32), and respectively installed on the first installation arm (11).

11. The foldable plant growing lamp according to claim 10, which is **characterized in that**, each of the bottom housing (31) and the top housing (32) is a groove-shaped structure, the bottom housing (31) and the top housing (32) opposite to each other to form a semi-closed structure with openings at both ends thereof; and wherein two ends of the top housing (32) along a width direction thereof are abutted against two ends of the bottom housing (31) along a width direction thereof, and a clamping slot (321) is provided on an inner side of the top housing (32) that is close to the two ends of the top housing (32), a clamping portion (311) provided on the bottom housing (31) and corresponding to the clamping slot (321), and the clamping portion (311) inserted into the clamping slot (321).

12. The foldable plant growing lamp according to claim 11, which is **characterized in that**, an arc-shaped cavity (322) is formed on a side wall of the clamping slot (321), and a sealing strip (38) is installed inside the arc-shaped cavity (322), the sealing strip (38) attached to the clamping portion (311), and configured to seal the two ends of the bottom housing (31) and the top housing (32) along the width direction thereof.

13. The foldable plant growing lamp according to claim 10, which is **characterized in that**, the control board (34) is equipped with a potentiometer (341), an electrical terminal (342), a plurality of RJ45 network ports (343) and a control switch (344), the drive power module (33) comprising a first drive power (331), a second drive power (332), a third drive power (333) and a fourth drive power (334), the electrical terminal (342) comprising a first interface (R) connected to the first drive power (331), a second interface (FR) connected to the second drive power (332), a third interface (UV) connected to the third drive power (333), and a fourth interface (W+B4) connected to the fourth drive power (334); and wherein the first drive power (331), the second drive power (332), the third drive power (333) and the fourth drive power (334) are respectively connected to a first light bead (a), a second light bead (b), a third light bead (c) and a fourth light bead (d) that are set on the LED light board (122), so that a first type of light, a second type of light, a third type of light and a fourth type of light with different frequency bands are respectively adjusted, wherein signals that are output from the first to fourth drive powers are 0-10V; and wherein
the potentiometer (341) is configured to adjust independent output intensity of the first types of light, the second types of light, the third types of light, and the fourth type of light with different frequency bands, so as to adjust an illumination spectrum thereof.

14. The foldable plant growing lamp according to claim 13, which is **characterized in that**, the control switch (344) comprises an electronic switch (3441) and a handle (3442), the electronic switch (3441) fixedly installed on the control board (34), and the handle (3442) connected to the electronic switch (3441) and configured to be passively toggled to change a state of the electronic switch (3441); and wherein the electronic switch (3441) is configured to adjust light intensity emitted from the first light bead, the second light bead, the third light bead, and the fourth light bead, so as to adjust a total output power of the foldable plant growing lamp thereof.

15. A foldable plant growing lamp, which is **characterized in that**, foldable plant growing lamp comprising:
a main lighting member (10) with two sides opposite to each other;
two extension lighting components (20 20') rotatably arranged on the two sides of the main lighting member (10), respectively;
two rotating modules (41) respectively arranged between the main lighting member (10) and the two extension lighting components (20 20'), and configured to drive the two extension lighting components (20 20') to rotate relative to the main lighting member (10);
a power supply member (30) installed on the main lighting member (10) and electrically connected to the main lighting member (10) and the two extension lighting components (20 20'); and wherein
the two extension lighting components (20 20') are rotated relative to the main lighting member (10) through the two rotating modules (41) to adjust an angle that is formed between the two extension lighting components (20 20') and the main lighting member (10), so as to adjust a light output direction of the two extension lighting components (20 20').

16. The foldable plant growing lamp according to claim 15, which is **characterized in that**, the main lighting member (10) comprises two first installation arms (11) opposite to each other, and a plurality of first lighting modules (12) arranged between the two first installation arms (11), two ends of the first lighting module (12) respectively mounted on the two first installation arms (11); and wherein each of the two extension lighting components (20 20') comprises two second installation arms (21) opposite to each other, and a plurality of second lighting modules (22) arranged between the two second installation arms (21), two ends of the second lighting module (22) respectively mounted on the two second installation arms (21), and the two second installation arms (21) corresponding to the two first second installation arms (11), respectively.

17. The foldable plant growing lamp according to claim 16, which is **characterized in that**, each of the two rotating modules (41) comprises a first connecting element (411), a second connecting element (412) and a bolt (413), the first connecting element (411) installed on an end of the first installation arm (11), the second connecting element (412) installed on an end of the second installation arm (21), the bolt (413) passing through the first connecting element (411) and the second connecting element (412), and configured to lock the first connecting element (411) and the second connecting element (412); and wherein the first connecting element (411) and the second connecting element (412) are rotatable around the bolt (413) to adjust the angle between the main lighting member (10) and the two extension lighting components (20 20').

18. The foldable plant growing lamp according to claim 17, which is **characterized in that**, the first connecting element (411) comprises a first rotating portion (4111) and a first fixing portion (4112) connected to each other, the first fixing portion (4112) arranged on a side of the first rotating portion (4111) and comprising an insertion portion (41121) and an outer portion (41122) connected to each other, the insertion portion (41121) inserted into the first installation arm (11), and the outer portion (41122) located outside the first installation arm (11); and wherein the second connecting element (412) comprises a second rotating portion (4121) and a second fixing portion (4122) connected to each other, the second rotating portion (4121) attached to the first rotating portion (4111), the second fixing portion (4122) opposite to the first fixing portion (4112), each of the first rotating portion (4111) and the second rotating portion (4121) comprising an installation hole (4113), and the bolt (413) passing through the installation holes (4113) to lock the first rotating portion (4111) and the second rotating portion (4121).

19. The foldable plant growing lamp according to claim 18, which is **characterized in that**, the rotating module (41) further comprises an adjusting element (414) installed on the first connecting element (411), one end of the adjusting element (414) screwed into the first fixing portion (4112), and the other end of the adjusting element (414) abutted against the second fixing portion (4122), wherein an angle between the first fixing portion (4112) and the second fixing portion (4122) is adjusted by adjusting a depth that the adjusting element (414) is screwed into the first fixing portion (4112), so as to adjust an illumination angle of each of the two extension lighting components (20 20').

20. The foldable plant growing lamp according to claim 19, which is **characterized in that**, a gap is formed between the first fixing portion (4112) and the second fixing portion (4122).
